# EUROPEAN PATENT SPECIFICATION

(11) **EP 2 196 814 B1**
(45) Date of publication and mention of the grant of the patent: **23.03.2016**
(21) Application number: 09015328.9
(22) Date of filing: 10.12.2009
(51) Int. Cl.: G01S 19/34, G01S 19/48

(54) **Mobile station and location information acquisition method**
Mobilstation und Erfassungsverfahren für Standortinformation
Station mobile et procédé d'acquisition d'informations de localisation

(30) Priority: 15.12.2008 JP 2008318748
(43) Date of publication of application: 16.06.2010
(73) Proprietor: NTT DOCOMO, INC., Chiyoda-ku Tokyo 100-6150 (JP)
(72) Inventor: Sasao, Nobuaki, Tokyo 100-6150 (JP)
(74) Representative: Hoffmann Eitle

(56) References cited:
- WO-A2-2007/001660
- US-A1- 2004 233 104
- US-A1- 2006 240 840
- US-A1- 2008 171 556
- US-A1- 2008 238 661

## Description

### Technical Field

The present invention relates to a technology of acquiring location information of a mobile station.

### Related Art

In US 2008/0171556 A1, there are described database update systems. In one arrangement, a method of operating a mobile user terminal in a communications system includes monitoring received broadcast signals and deriving first identification data of fixed wireless nodes from the received broadcast signals. The method includes using data derived from a stored database in combination with the derived first identification data in order to provide a service to a user of a mobile user terminal. The method further includes deriving update data from at least the derived first identification data and transmitting the derived update data to a database administration node in order to allow the stored database of fixed wireless nodes to be updated.

In US 2006/0240840 A1, there is described a continuous data optimization by filtering and positioning systems. In more detail, there are described methods and systems of continuously optimizing data in WiFi positioning systems. A location-based services system for WiFi-enabled devices calculates the position of WiFi-enabled devices. A WiFi-enabled device communicates with WiFi access points within range of the WiFi-enabled device so that observed WiFi access points identify themselves. A reference database is accessed to obtain information specifying a recorded location for each observed WiFi access point. The recorded location information for each of the observed WiFi access points is used in conjunction with predefined rules to determine whether an observed WiFi access point should be included or excluded from a set of WiFi access points. The recorded location information of only the WiFi access points included in the set are used and the recorded location information of the excluded WiFi access points are excluded when calculating the geographical position of the WiFi-enabled device.

In WO 2007/001660 A2, there is described a positioning service utilizing existing radio base stations. Here, the position information can be provided through a Web service and/or locally on a mobile user device. The position information can be provided with certainty and/or uncertainty probability percentage or other perceivable means for the user to determine expected accuracy of the location information. Also, there are described means for updating base station information to include newly detected base stations through information from a plurality of user devices, wherein each user device is given a reliance factor.

A communication terminal may include a location unit; in particular, a communication terminal that utilizes a wireless network such as a wireless LAN. As one example, there is disclosed in Japanese Patent Application 2006-145438A a communication terminal that performs locationing when the terminal connects to a wireless LAN connection device, and that records a result of the locationing as location information of the wireless LAN connection device.

In the case of a technology disclosed in 2006-145438A, because the communication terminal is required to display the location information of a present location, each time the location information is displayed on the terminal it is necessary for locationing to be again carried out.

### Summary

One of the objects of the present invention is to provide a mobile station in which a number of times that locationing is required to be carried out can be made relatively few.

In an aspect of the present invention, there is provided a mobile station including the features of claim 1.

In another preferred aspect of the present invention, the mobile station further includes a measuring unit that measures a received radio field intensity when the detecting unit detects the communication-ready network, wherein: the control unit causes the memory to store the location information acquired by the location acquisition unit in association with the received radio field intensity measured by the measuring unit; and when plural of location information is associated with the network, calculates new location information on the basis of received radio intensities corresponding to the plural location information, and causes the memory to store the newly calculated location information in association with the received radio field intensity.

In yet another preferred aspect of the present invention, the predetermined process is a process that displays information associated with the location information on a display section of the mobile station.

In yet another preferred aspect of the present invention, the predetermined process is a process that calculates new location information.

In yet another aspect of the present invention, the detecting unit attempts to detect a communication-ready network at a predetermined Further embodiments are defined by the remaining claims.

In addition, in descriptions of configuration of exemplary embodiments of the present invention, it is assumed that "network" may instead be a "node (connected to the network)" or a "communication device (connected to the network)" according to need. Moreover, an aspect of the present invention can be also specified as a program for a communication system including the above-described mobile station that causes functions to be carried in relation to the mobile station.

According to an aspect of the present invention, when a mobile station acquires the location information for itself, at need, such location information can be acquired by performing locationing a relatively few number of times.

### Brief Description of the Drawings

Exemplary embodiments of the present invention will now be described in detail based on the following figures, wherein:
Fig. 1 is a drawing showing a schematic configuration of a communication system;
Fig. 2 is a block diagram showing a configuration of a mobile station;
Fig. 3 is a functional block diagram showing functions realized by the mobile station;
Fig. 4 is a diagram showing examples of location information;
Fig. 5 is a flowchart showing processes performed by the mobile station; and
Fig. 6 is a functional block diagram showing functions realized by a modification example of the mobile station.

### Detailed Description

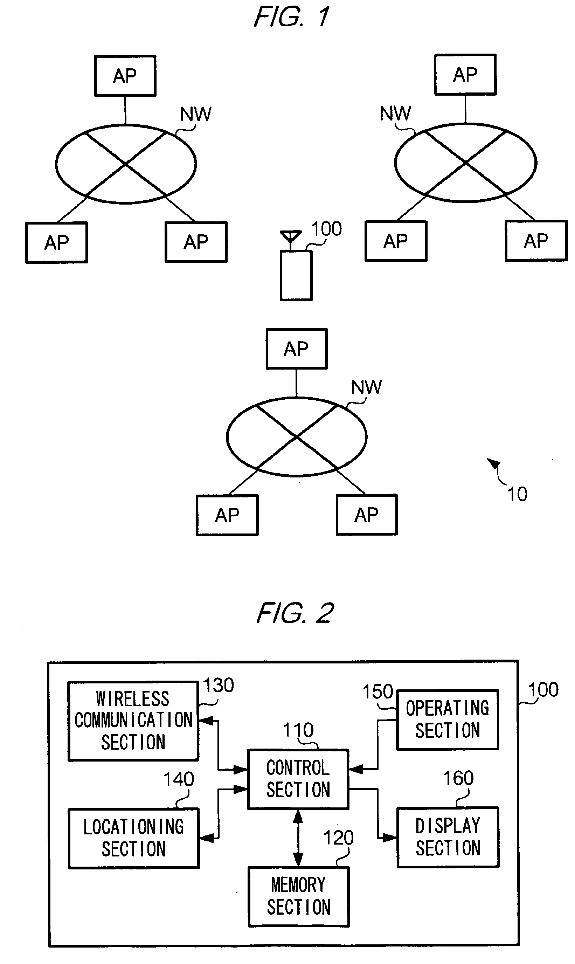

Fig. 1 is a drawing showing a schematic configuration of a communication system according to an exemplary embodiment of the present invention. A communication system according to this embodiment 10 is a wireless LAN (local area network) composed of a mobile station 100, and one or more networks NW. The mobile station 100 - for example, a PDA (personal digital assistant) or a smart phone - communicates with the network NW via wireless. The network NW is composed of plural nodes. There are access points AP among nodes included in the network NW. An access point AP communicates with the mobile station 100 by wireless. This communication performed between the access point AP and the mobile station can be voice communication or data communication. Each access point AP is assigned unique identification information to identify the access point. The SSID (service set identifier) system or the ESSID (extended SSID) system can be used for identification information. If the ESSID system is used for identification information, an ESSID can be assigned to plural access points.

Fig. 2 is a block diagram showing a configuration of the mobile station 100. As shown in Fig. 2, the mobile station 100 includes a control section 110, a memory section 120, a wireless communication section 130, a locationing section 140, an operating section 150, and a display section 160. The control section 110 includes a CPU (central processing unit), and one or more memories, and controls particular functions of the above sections of the mobile station 100 by executing stored programs. The memory section 120 is a writable memory such as a hard disk or an EEPROM (electrically erasable and programmable read only memory), and stores data. There is location information among data stored by the memory section 120. The wireless communication section 130 is a communication unit that communicates with the network NW, and sends or receives data via the network NW. The locationing section 140 includes a locationing unit to acquire the location information of the mobile station 100. The locationing section 140 performs locationing under predetermined instructions. In other words, the locationing section 140 does not constantly perform locationing. The locationing system of the locationing section 140 according to this exemplary embodiment is a GPS (global positioning system). A GPS is a system that detects signals issued by satellites and determines on a basis of such detected signals detected a location of the terminal associated with the GPS. The operating section 150 includes operating parts such as press keys and the like, and provides to the control section 110 information on operations carried out by a user via the operating section. The display section 160 includes a display such as a liquid crystal display, and a driving unit that drives the display to display characters and/or images. If the mobile station 100 is used only for voice communication, it is may not be necessary for the display section 160 to be included.

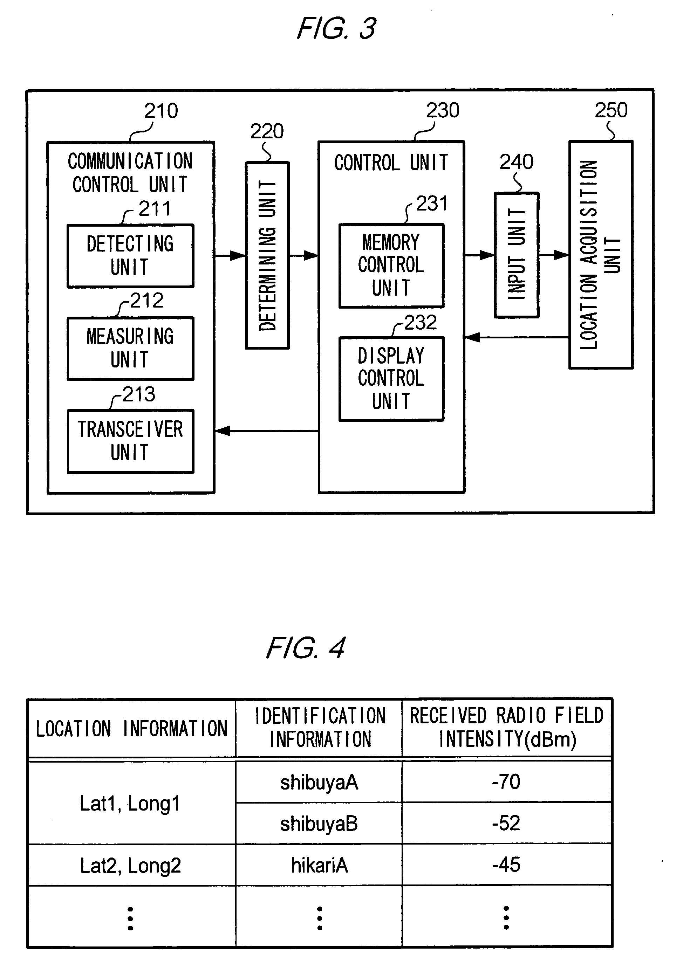

Fig. 3 is a functional block diagram showing functions realized by the control section 110. The control section 110 realizes a communication control unit 210, a determining unit 220, a control unit 230, an input unit 240, and a location acquisition unit 250 that function under execution of specified stored programs. The communication control unit 210 has a function to control wireless communication performed via the wireless communication section 130. The wireless communication section 130 includes a detecting unit 211, a measuring unit 212, and a transceiver unit 213. The detecting unit 211 has a function to detect a network NW ready for wireless communication. The detection performed by the detecting unit 211 may be performed not only once when the network NW becomes ready for communication but a number of times during a period in which it is determined that the network NW remains ready for communication. The measuring unit 212 has a function to measure a radio field intensity received by the mobile station 100 at a location where and at a time when an access point AP connected to the network is detected by the detecting unit 211. The transceiver unit 213 has a function to send and receive data during the period when the network NW remains ready for communication. The determining unit 220 has a function to determine whether the memory section 120 stores the location information associated with the network NW when the network NW is detected by the detecting unit 211. The control unit 230 performs processes according to determination results provided by the determining unit 220. As described below, a plurality of processes may be carried out in accordance with the determination results provided. The control unit 230 includes a memory control unit 231 that controls data reading/writing from/to the memory section 120, and a display control unit 232 that controls displays on the display section 160. The input unit 240 functions to issue instructions to cause the locationing section 140 to perform locationing with the location acquisition unit 250. The input unit 240 according to this exemplary embodiment issues instructions to the locationing section 140 on the basis of instructions from the control unit 230. The location acquiring unit 250 functions to cause the locationing section 140 to perform locationing in order to acquire location information.

Fig. 4 is a diagram showing examples of location information stored in the memory section 120. In the memory section 120, location information is stored in association with a network NW. In concrete terms, the association between the location information and the network NW is realized by storing the location information in association with identification information of the network NW. Here, location information associated with the network NW is represented by, for example, a location coordinate of one point in an area where the mobile station 100 is able to connect to the network NW via an access point AP. Location information is represented as a latitudinal degree and/or longitudinal degree. Identification information is represented by an identifier that identifies a network NW, for example, a domain name of a network. A received radio field intensity acquired by the measuring unit 212 is stored in association with the location information in the memory section 120 according to need.

There can be envisaged a case where plural identification information is associated with location information. For example, if a mobile station is able to communicate with plural networks NW, plural identification information is stored in association with the corresponding networks. If a service area of a network NW (a geographic area where the network NW is able to communicate with the mobile station) is large, plural location information is associated with the identification information of the network NW.

The configuration of the communication system according to this exemplary embodiment 10 is as described above. The mobile station 100 moves in conjunction with a user carrying the terminal. Accordingly, the mobile station 100 may be within range of the service area of the network NW at a particular time and out of range of the service are of the network NW at a particular time, depending on a location of the user carrying the mobile station 100. When the mobile station 100 moves to within the range of the service area of the network NW from a location outside of the range of the service area of the network NW, operation of the terminal is as described below.

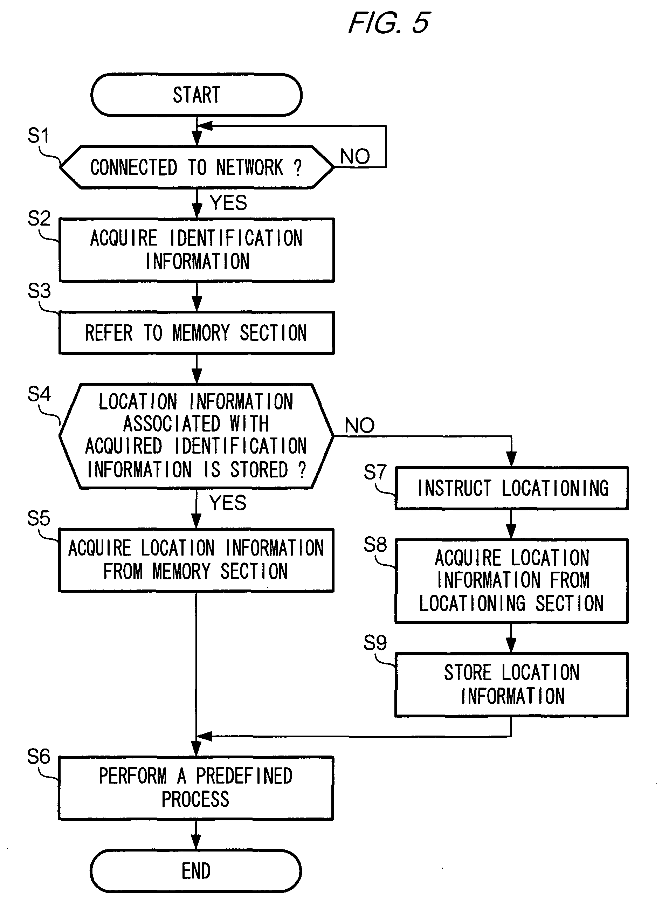

Fig. 5 is a flowchart showing the processes performed by the control section 110 of the mobile station 100. As shown in Fig. 5, the control section 110 attempts to detect a network ready for communication NW (at step S1), and if the network NW ready for communication is detected, the control section 110 acquires the identification information of the network NW (at step S2). The control section 110 repeats the operation at step 1 until a network NW ready for communication is detected. Next, referring to the memory section 120 (step S3), the control section 110 determines whether location information associated with the identification information acquired at step S2 is stored (at step S4).

If the location information associated with the acquired identification information is stored (Yes at step S4), the control section 110 acquires the location information by reading it out from the memory section 120 (at step S5). Thus, the control section 110 performs a predetermined process using the acquired piece of location information (at step S6). On the other hand, if the location information associated with the acquired identification information is not stored (No at step S4), the control section 110 issues instructions for the locationing section 140 to perform locationing (at step S7), and acquires the location information acquired by the locationing section 140 (at step s8). Then the control section 110 causes the memory section 120 to store the location information acquired at step S8 in association with the identification information acquired at step S2 (at step S9), and performs the predetermined process (at step S6).

The process at step S6 is performed using the location information acquired from the memory section 120 or acquired from the locationing section 140. For example, the control section 110 controls the display section 160 so that locations represented by the location information are highlighted on a map. Alternatively, the control section 110 can be configured to acquire information about facilities at a periphery of the location represented by the location information by conducting a read out from the memory section 120 or by receiving from the wireless communication section 130 an instruction to display the location information.

If the mobile station 100 is a terminal for voice communication and communicates with a network NW for call connection, the process at step S6 can be a calling process during which process the acquired location information is sent out in addition to voice data. In such a case, the location information can be included to be sent in an emergency call (such as a call to a police station or a fire station) in voice communication using a wireless LAN, for example.

As described above, in the mobile station 100 according to this exemplary embodiment, locationing can be omitted if location information associated with the network NW ready for communication is stored. Therefore, a number of locationings performed by the mobile station 100 can be restrained to be fewer than those required to be performed by a terminal that is configured such that locationing is constantly performed, or locationing is performed each and every time a network becomes ready for communication, with a result that in the mobile station 100 a time necessary for performing locationing can be reduced, and an amount of power consumed by the mobile station can accordingly be reduced as compared with the conventionally configured terminal described above.

### Modification examples

An example of the present invention is not limited to the above-described exemplary embodiment, and various examples of the present invention can be realized by other exemplary embodiments. For example, some examples of the present invention can be realized as set out in modification examples described below. In addition, other examples of the present invention can be realized under any combinations of these modification examples.

### Modification example 1

In an aspect of the present invention, a trigger to perform locationing can be included in a user's operation and the like, or can be realized by implementing a predetermined timing. For example, if two modes, - a mode in which locationing is performed according to need (hereinafter referred to as normal mode hereinafter), and a mode in which locationing is performed constantly or periodically to store location information (hereinafter referred to as a learning mode) - have been installed, these modes can be used alternately depending on timings at which user operations are carried out.

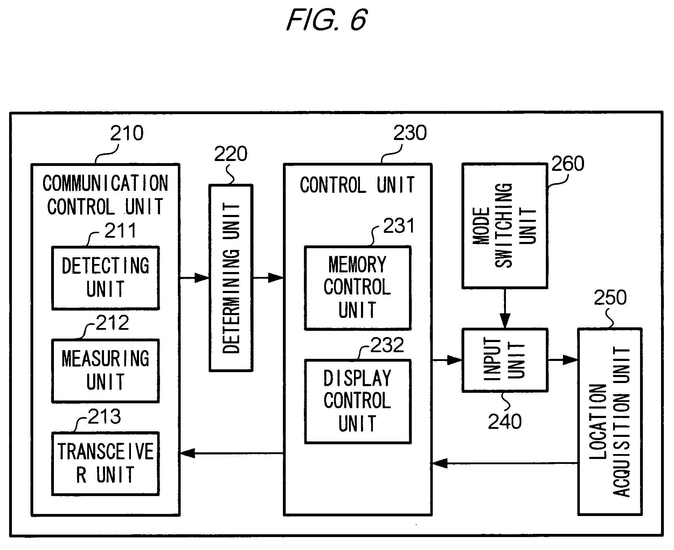

Fig. 6 is a functional block diagram of this modification example. In Fig. 6, units that are equal to those in Fig. 3 are denoted by the same reference numerals. In other words, the units in this example are the same as those in Fig. 3 except for a mode switching unit 260 in Fig. 6. The input unit 240 of this example issues instructions for locationing on a basis of instructions from the control unit 230 or on a basis of instructions from the mode switching unit 260.

The mode switching unit 260 has a function to switch between the normal mode and the learning mode. The mode switching unit 260 switches between the alternate modes depending on an operation carried out by a user, for example. In addition, the switching unit 260 can be configured to set the mode of locationing to the learning mode when the residual capacity of a battery in the mobile station is, sufficient, that is, more than or equal to a predetermined threshold; and the switching unit 260 can be configured to set the mode of locationing to the normal mode when the residual capacity of the battery in the mobile station is less than the predetermined threshold. Moreover, if the mode switching unit 260 has a timer function, the mode switching unit 260 can be configured to switch between the two modes at certain time intervals. The mode switching unit 260 informs the input unit 240 of the mode in which the mobile station is operating.

The input unit 240 operates according to the mode in which the input unit 240 is informed by the mode switching unit 260. For example, in the normal mode, the input unit 240 issues instructions to the location acquisition unit 250 in the same manner as described in the previous exemplary embodiment. In the learning mode, the input unit 240 issues instructions to the location acquisition unit 250 constantly or periodically. In other words, the location acquisition unit 250 causes the locationing section 140 to perform locationing constantly or periodically to acquire location information repeatedly.

Alternatively, the operation of the learning mode can be configured to be performed even if the mobile station is not connected to any network, and the operation of the normal mode can be configured to be performed when the mobile station is connected to a network. In this configuration, the location acquisition unit 250 does not repeat the acquisition of location information while the mobile station is connected to the network.

### Modification example 2

The detecting unit according to an aspect of the present invention can be configured to detect a network ready for communication constantly or periodically, or can be configured to detect a network ready for communication according to need. The detecting unit according to an aspect of the present invention can be configured to start detecting a network ready for communication on the basis of an operation and the like by a user. Moreover, the detecting unit according to an aspect of the present invention can be configured to attempt to again detect a network ready for communication subsequent to a failed attempt to detect a network ready for communication.

The detecting unit according to an aspect of the present invention can be configured to change network detection on the basis of modes similar to the modification set out in example 1. For example, the detecting unit can be configured to operate in one mode in which network detection is performed according to need or in another mode in which network detection is performed constantly or periodically. Moreover, these modes can be configured to be alternated with each other on a time basis, or on a basis of a type of operation carried out by the user or a timing of the operation carried out by the user.

### Modification example 3

The control unit according to an aspect of the present invention can be configured to perform calculation and the like using location information acquired by the memory or the locationing unit, acquires new location information, and uses the new location information in place of using the location information acquired by the memory or the locationing unit as it is. For example, the control unit can be configured such that, if plural location information is stored in the memory in association with identification information, the control unit calculates a middle point of the locations represented by this location information, and performs a predetermined process using the calculated middle point. In addition, in the above-described case, control unit can be configured that, if received radio field intensities are associated with plural pieces of location information, the control unit calculates new location information using weighting according to the received radio field intensities. Generally speaking, the closer an access point the greater a radio field intensity is of that access point. Thus, if a first access point and a second access point exists, and a radio field intensity received when the first access point is detected is greater than that received when the second access point is detected, the distance between the mobile station and the first access point, will in general, be less than that between the mobile station and the second access point. The control unit is able to perform a calculation in accordance with this principle.

The principle of this example can be also applied to a case where plural access points are detected at the same time. In addition, in the above case, it is also possible for location information of one access point to be acquired from the memory, and for location information of another access point to be acquired from the locationing unit.

### Modification example 4

The locationing unit according to an aspect of the present invention is not limited to a GPS, and other locationing systems can be employed. For example, a locationing unit can perform locationing using a base station positioning system. Here, the base station positioning system is a system in which a base station that is a node in a mobile communication network and location information of the base station is contained in the base station. Thus, when a mobile station acquires the location information of the base station the mobile station is able to communicate with the base station. The location information of the base station can be a latitudinal degree and/or longitudinal degree as described in the previous exemplary embodiment, or can be address information such as "2, Nagata-cho, Chiyodaku, Tokyo," or information about names of facilities such as buildings and the like.

In the previous exemplary embodiment, if a base station locationing system is employed as a locationing system of the locationing unit, a mobile communication network is necessary in addition to a network NW such as a wireless LAN. In this case, the mobile station has a communication unit to connect to the network NW (a first communication unit) and a communication unit to connect the mobile communication network (a second communication unit), and uses the second communication unit as a locationing unit. A mobile station according to an aspect of the present invention can be also configured to include plural locationing units with different locationing systems. A mobile station according to an aspect of the present invention can be also configured to include, for example, a first locationing unit with a base station locationing system and a second locationing system with a GPS. In the above-described case, even if one of the locationing units cannot perform locationing, there is a possibility that the other can perform locationing.

### Modification example 5

An aspect of the present invention is not limited to one realized using wireless LANs. For example, if a mobile station includes a RFID (radio frequency identification) tag, a reader that receives radio waves from the RFID tag can be used as a communication apparatus corresponding to the above-described access point AP, so that a further aspect of the present invention can be realized. In addition, a reader that is not connected to a network can be also used in this configuration. Moreover, communication performed by the mobile station is not limited to wireless communication, and communication by cable or the like can also be adopted for the system.

### Modification example 6

A mobile station according to an aspect of the present invention can be, for example, a cellular phone, a portable game machine, a digital still camera, or a digital video camera, as well as a PDA, a smart phone. In addition, a portable computer such a notebook personal computer can be used as a mobile station according to an aspect of the present invention.

### Modification example 7

An aspect of the present invention can be also specified as an example of the control section 110 or as a program executed by the control section 110 as well as an example of the mobile station 100. In addition, such a program can be downloaded to the mobile station 100 via a network such as the Internet and can be installed on the mobile station and used. Moreover, an aspect of the present invention can be specified as a recording medium such as an optical disk in which such a program is stored.

## Claims

1. A mobile station (100), comprising:
a memory (120);
a location acquisition unit (140) configured to acquire location information of the mobile station;
a detection unit (211) configured to detect a network ready for wireless communication;
a determining unit (220) configured, when the detecting unit (211) detects the network ready for wireless communication, to determine whether location information in association with identification information of the network detected by the detecting unit (211) is stored in the memory;
a control unit (110) configured, when the determining unit (220) determines that location information in association with the detected network is stored in the memory, to perform a predetermined process using the stored location information, and when the determining unit (220) determines that location information in association with the identification information of the detected network is not stored in the memory, to instruct the location acquisition unit (140) to acquire the location information of the mobile station (100), to perform the predetermined process using the location information acquired by the location acquisition unit (140), and to cause the memory (120) to store the location information acquired by the location
acquisition unit in association with the identification information of the network detected by the detecting unit (211);
wherein the mobile station is a terminal for voice communication and, if the mobile station communicates with a network for call connection, the predetermined process is a calling process during which the acquired location information is sent out in addition to voice data.

2. The mobile station according to claim 1, further comprising a measuring unit (212) that measures a received radio field intensity when the detecting unit (211) detects the network ready for wireless communication, wherein:
the control unit (110) causes the memory (120) to store the location information acquired by the location acquisition unit (140) in association with the received radio field intensity measured by the measuring unit (212); and when a plurality of location information of the mobile station (100) previously acquired by the location acquisition unit (140) is associated with the identification information of the network, calculates new location information as a middle point of locations represented by the plurality of location information using weighting according to the received radio intensities corresponding to the plurality of location information, and causes the memory (120) to store the newly calculated location information in association with the received radio field intensity.

3. The mobile station according to claim 1, wherein the predetermined process is a process that displays information associated with the location information on a display section (160) of the mobile station.

4. The mobile station according to claim 1, wherein the predetermined process is a process that calculates new location information.

5. The mobile station according to claim 1, wherein the detecting unit (211) is configured to attempt to detect a network ready for wireless communication at a predetermined timing.

6. The mobile station according to claim 1, wherein the location acquisition unit (140) acquires location information using a base station location system or a GPS.

7. A location information acquisition method used in a mobile station (100) including a location acquisition unit (140) that acquires location information of the mobile station (100), comprising:
detecting (S1) a network ready for wireless communication;
determining (S4), when the network ready for wireless communication is detected, whether location information in association with identification information of the network is stored in a memory (120);
performing, when it is determined that location information in association with the identification information of the network is stored in the memory (120), a predetermined process (S6) using the stored location information;
issuing (S5), when it is determined that location information in association with the identification information of the network is not stored in the memory (120), instructions for the location acquisition unit (140) to acquire the location information of the mobile station;
performing (S6) the predetermined process using the location information acquired by the location acquisition unit (140); and
causing (S9) the memory (120) to store the location information in association with the identification information of the detected network; and
wherein the mobile station is a terminal for voice communication and, if the mobile station communicates with a network for call connection, the predetermined process is a calling process during which the acquired location information is sent out in addition to voice data.

8. A computer program product for causing a computer implemented in a mobile station (100) to execute:
detecting a network ready for wireless communication;
determining, when the network ready for wireless communication is detected, whether location information in association with identification information of the detected network is stored in a memory (120);
performing, when it is determined that location information in association with the identification information of the detected network is stored in the memory, a predetermined process using the stored location information;
issuing, when it is determined that location information in association with the network is stored in the memory (120), instructions for a location acquisition unit (140) of the mobile station (100) to acquire the location information of the mobile station (100);
performing the predetermined process using the location information acquired by the location acquisition unit (140); and
causing the memory (120) to store the location information in association with the identification information of the detected network; and
wherein the mobile station is a terminal for voice communication and, if the mobile station communicates with a network for call connection, the predetermined process is a calling process during which the acquired location information is sent out in addition to voice data.

## Patentansprüche

1. Eine Mobilstation (100), umfassend:
einen Speicher (120);
eine Positionserfassungseinheit (140), ausgebildet zum Erfassen einer Positionsinformation der Mobilstation;
eine Detektionseinheit (211), ausgebildet zum Detektieren eines für eine Drahtloskommunikation bereiten Netzwerks;
eine Bestimmungseinheit (220), ausgebildet, wenn die Bestimmungseinheit (211) das für eine Drahtloskommunikation bereite Netzwerk detektiert, zum Bestimmen, ob eine Positionsinformation in Verbindung mit einer Identifikationsinformation des durch die Detektionseinheit (211) detektierten Netzwerks in dem Speicher gespeichert ist;
eine Steuereinheit (110), ausgebildet, wenn die Bestimmungseinheit (220) bestimmt, dass eine Positionsinformation in Verbindung mit dem detektierten Netzwerk in dem Speicher gespeichert ist, zum Ausführen eines vorbestimmten Prozesses unter Verwendung der gespeicherten Positionsinformation, und, wenn die Bestimmungseinheit (220) bestimmt, dass eine Positionsinformation in Verbindung mit der Identifikationsinformation des detektierten Netzwerks nicht in dem Speicher gespeichert ist, zum Anweisen der Positionserfassungseinheit (140) zum Erfassen der Positionsinformation der Mobilstation (100), zum Ausführen des vorbestimmten Prozesses unter Verwendung der durch die Positionserfassungseinheit (140) erfassten Positionsinformation und zum Veranlassen des Speichers (120) die durch die Positionserfassungseinheit erfasste Positionsinformation in Verbindung mit der Identifikationsinformation des durch die Detektionseinheit (211) detektierten Netzwerks zu speichern;
wobei die Mobilstation ein Endgerät für eine Sprachkommunikation ist und, falls die Mobilstation mit einem Netzwerk für eine Anrufverbindung kommuniziert, der vorbestimmte Prozess ein Anrufprozess ist, während welchem die erfasste Positionsinformation zusätzlich zu Sprachdaten ausgesendet wird.

2. Mobilstation gemäß Anspruch 1, weiter umfassend eine Messeinheit (212), welche eine Funkfeld-Empfangsintensität misst, wenn die Detektionseinheit (211) das für eine Drahtloskommunikation bereite Netzwerk detektiert, wobei:
die Steuereinheit (110) den Speicher (120) dazu veranlasst die durch die Positionserfassungseinheit (140) erfasste Positionsinformation in Verbindung mit der durch die Messeinheit (212) gemessenen Funkfeld-Empfangsintensität zu speichern; und, wenn eine durch die Positionserfassungseinheit (140) vorab erfasste Vielzahl von Positionsinformationen der Mobilstation (100) in Verbindung mit der Identifikationsinformation des Netzwerks ist, neue Positionsinformationen als einen Mittelpunkt von Positionen, dargestellt durch die Vielzahl von Positionsinformationen, unter Verwendung einer Gewichtung entsprechend den Funk-Empfangsintensitäten, zugehörend zu der Vielzahl von Positionsinformationen, berechnet und den Speicher (120) dazu veranlasst die neuberechneten Positionsinformationen in Verbindung mit der Funkfeld-Empfangsintensität zu speichern.

3. Mobilstation gemäß Anspruch 1, wobei der vorbestimmte Prozess ein Prozess ist, welcher eine mit der Positionsinformation verbundene Information auf einer Anzeigeeinheit (160) der Mobilstation anzeigt.

4. Mobilstation gemäß Anspruch 1, wobei der vorbestimmte Prozess ein Prozess ist, welcher neue Positionsinformationen berechnet.

5. Mobilstation gemäß Anspruch 1, wobei die Detektionseinheit (211) ausgebildet ist zu versuchen, ein für eine Drahtloskommunikation bereites Netzwerk zu einem vorbestimmten Timing zu detektieren.

6. Mobilstation gemäß Anspruch 1, wobei die Positionserfassungseinheit (140) Positionsinformationen unter Verwendung eines Basisstation-Positionssystems oder eines GPS erfasst.

7. Ein Positionsinformation-Erfassungsverfahren, verwendet in einer Mobilstation (100), umfassend eine Positionserfassungseinheit (140), welche eine Positionsinformation der Mobilstation (100) erfasst, umfassend:
Detektieren (S1) eines für eine Drahtloskommunikation bereiten Netzwerks;
Bestimmen (S4), wenn das für eine Drahtloskommunikation bereite Netzwerk detektiert ist, ob eine Positionsinformation in Verbindung mit einer Identifikationsinformation des Netzwerks in einem Speicher (120) gespeichert ist;
Ausführen, wenn bestimmt ist, dass eine Positionsinformation in Verbindung mit der Identifikationsinformation des Netzwerks in dem Speicher (120) gespeichert ist, eines vorbestimmten Prozesses (S6) unter Verwendung der gespeicherten Positionsinformation;
Ausgeben (S5), wenn bestimmt ist, dass eine Positionsinformation in Verbindung mit der Identifikationsinformation des Netzwerks nicht in dem Speicher (120) gespeichert ist, von Anweisungen für die Positionserfassungseinheit (140) zum Erfassen der Positionsinformation der Mobilstation;
Ausführen (S6) des vorbestimmten Prozesses unter Verwendung der durch die Positionserfassungseinheit (140) erfassten Positionsinformation; und
Veranlassen (S9) des Speichers (120) die Positionsinformation in Verbindung mit der Identifikationsinformation des detektierten Netzwerks zu speichern; und
wobei die Mobilstation ein Endgerät für eine Sprachkommunikation ist und, falls die Mobilstation mit einem Netzwerk für eine Anrufverbindung kommuniziert, der vorbestimmte Prozess ein Anrufprozess ist, während welchem die erfasste Positionsinformation zusätzlich zu Sprachdaten ausgesendet wird.

8. Ein Computerprogrammprodukt zum Veranlassen eines Computers, umgesetzt in einer Mobilstation (100), auszuführen:
Detektieren eines für eine Drahtloskommunikation bereiten Netzwerks;
Bestimmen, wenn das für eine Drahtloskommunikation bereite Netzwerk detektiert ist, ob eine Positionsinformation in Verbindung mit einer Identifikationsinformation des detektierten Netzwerks in einem Speicher (120) gespeichert ist;
Ausführen, wenn bestimmt ist, dass eine Positionsinformation in Verbindung mit der Identifikationsinformation des detektierten Netzwerks in dem Speicher gespeichert ist, eines vorbestimmten Prozesses unter Verwendung der gespeicherten Positionsinformation;
Ausgeben, wenn bestimmt ist, dass eine Positionsinformation in Verbindung mit dem Netzwerk in dem Speicher (120) gespeichert ist, von Anweisungen für eine Positionserfassungseinheit (140) der Mobilstation (100) zum Erfassen der Positionsinformation der Mobilstation (100);
Ausführen des vorbestimmten Prozesses unter Verwendung der durch die Positionserfassungseinheit (140) erfassten Positionsinformation; und
Veranlassen des Speichers (120), die Positionsinformation in Verbindung mit der Identifikationsinformation des detektierten Netzwerks zu speichern; und
wobei die Mobilstation ein Endgerät für eine Sprachkommunikation ist und, falls die Mobilstation mit einem Netzwerk für eine Anrufverbindung kommuniziert, der vorbestimmte Prozess ein Anrufprozess ist, während welchem die erfasste Positionsinformation zusätzlich zu Sprachdaten ausgesendet wird.

## Revendications

1. Station mobile (100) comprenant :
une mémoire (120) ;
une unité d'acquisition de localisation (140) configurée pour acquérir des informations de localisation de la station mobile ;
une unité de détection (211) configurée pour détecter un réseau prêt pour une communication sans fil ;
une unité de détermination (220) configurée, quand l'unité de détection (211) détecte le réseau prêt pour une communication sans fil, pour déterminer si des informations de localisation en association avec des informations d'identification du réseau détecté par l'unité de détection (211) sont stockées dans la mémoire ;
une unité de commande (110) configurée, quand l'unité de détermination (220) détermine que les informations de localisation en association avec le réseau détecté sont stockées dans la mémoire, pour effectuer un processus prédéterminé en utilisant les informations de localisation stockées et, quand l'unité de détermination (220) détermine que les informations de localisation en association avec les informations d'identification du réseau détecté ne sont pas stockées dans la mémoire, donner instruction à l'unité d'acquisition de localisation (140) d'acquérir les informations de localisation de la station mobile (100), effectuer le processus prédéterminé en utilisant les informations de localisation acquises par l'unité d'acquisition de localisation (140) et amener la mémoire (120) à stocker les informations de localisation acquises par l'unité d'acquisition de localisation en association avec les informations d'identification du réseau détecté par l'unité de détection (211) ;
dans laquelle la station mobile est un terminal pour une communication vocale et, si la station mobile communique avec un réseau pour une connexion d'appel,
le processus prédéterminé est un processus d'appel durant lequel les informations de localisation acquises sont envoyées en plus de données vocales.

2. Station mobile selon la revendication 1, comprenant en outre une unité de mesure (212) qui mesure une intensité de champ radio reçue quand l'unité de détection (211) détecte le réseau prêt pour une communication sans fil, dans laquelle :
l'unité de commande (110) amène la mémoire (120) à stocker les informations de localisation acquises par l'unité d'acquisition de localisation (140) en association avec l'intensité de champ radio reçue mesurée par l'unité de mesure (212) ; et, quand une pluralité d'informations de localisation de la station mobile (100) précédemment acquises par l'unité d'acquisition de localisation (140) sont associées aux informations d'identification du réseau, calcule de nouvelles informations de localisation comme point central de positions représentées par la pluralité d'informations de localisation en utilisant une pondération en fonction des intensités radio reçues correspondant à la pluralité d'informations de localisation, et amène la mémoire (120) à stocker les informations de localisation nouvellement calculées en association avec l'intensité de champ radio reçue.

3. Station mobile selon la revendication 1, dans laquelle le processus prédéterminé est un processus qui affiche des informations associées aux informations de localisation sur une section d'affichage (160) de la station mobile.

4. Station mobile selon la revendication 1, dans laquelle le processus prédéterminé est un processus qui calcule de nouvelles informations de localisation.

5. Station mobile selon la revendication 1, dans laquelle l'unité de détection (211) est configurée pour tenter de détecter un réseau prêt pour la communication sans fil à une synchronisation prédéterminée.

6. Station mobile selon la revendication 1, dans laquelle l'unité d'acquisition de localisation (140) acquiert des informations de localisation en utilisant un système de localisation de station de base ou un GPS.

7. Procédé d'acquisition d'informations de localisation utilisé dans une station mobile (100) comprenant une unité d'acquisition de localisation (140) qui acquiert des informations de localisation de la station mobile (100), comprenant les étapes consistant à :
détecter (S1) un réseau prêt pour une communication sans fil ;
déterminer (S4), quand le réseau prêt pour une communication sans fil est détecté, si des informations de localisation en association avec des informations d'identification du réseau sont stockées dans une mémoire (120) ;
exécuter, quand il est déterminé que les informations de localisation en association avec les informations d'identification du réseau sont stockées dans la mémoire (120), un processus prédéterminé (S6) en utilisant les informations de localisation stockées ;
émettre (S5), quand il est déterminé que les informations de localisation en association avec les informations d'identification du réseau ne sont pas stockées dans la mémoire (120), des instructions pour l'unité d'acquisition de localisation (140) pour acquérir les informations de localisation de la station mobile ;
exécuter (S6) le processus prédéterminé en utilisant les informations de localisation acquises par l'unité d'acquisition de localisation (140) ; et
amener (S9) la mémoire (120) à stocker les informations de localisation en association avec les informations d'identification du réseau détecté ; et
dans lequel la station mobile est un terminal pour une communication vocale et, si la station mobile communique avec un réseau pour une connexion d'appel, le processus prédéterminé est un processus d'appel durant lequel les informations de localisation acquises sont envoyées en plus de données vocales.

8. Produit de programmation informatique pour amener un ordinateur mis en oeuvre dans une station mobile (100) à exécuter les étapes consistant à :
détecter un réseau prêt pour une communication sans fil ;
déterminer, quand le réseau prêt pour une communication sans fil est détecté, si des informations de localisation en association avec des informations d'identification du réseau détecté sont stockées dans une mémoire (120) ;
exécuter, quand il est déterminé que les informations de localisation en association avec les informations d'identification du réseau détecté sont stockées dans la mémoire, un processus prédéterminé en utilisant les informations de localisation stockées ;
émettre , quand il est déterminé que les informations de localisation en association avec les informations d'identification du réseau sont stockées dans la mémoire (120), des instructions pour une unité d'acquisition de localisation (140) de la station mobile (100) pour acquérir les informations de localisation de la station mobile (100) ;
exécuter le processus prédéterminé en utilisant les informations de localisation acquises par l'unité d'acquisition de localisation (140) ; et
amener la mémoire (120) à stocker les informations de localisation en association avec les informations d'identification du réseau détecté ; et
dans lequel la station mobile est un terminal pour une communication vocale et, si la station mobile communique avec un réseau pour une connexion d'appel, le processus prédéterminé est un processus d'appel durant lequel les informations de localisation acquises sont envoyées en plus de données vocales.
